# EUROPÄISCHE PATENTSCHRIFT

(11) **EP 1 593 582 B1**
(45) Veröffentlichungstag und Bekanntmachung des Hinweises auf die Patenterteilung: **21.08.2013**
(21) Anmeldenummer: 05101865.3
(22) Anmeldetag: 10.03.2005
(51) Int. Cl.: B62D 5/04

(54) **Verfahren zur Steuerung einer elektrischen Servolenkung**
Method for controlling an electric assist steering system
Procédé de commande d'un système électrique de direction assistée

(30) Priorität: 06.05.2004 DE 102004022450
(43) Veröffentlichungstag der Anmeldung: 09.11.2005
(73) Patentinhaber: ZF Lenksysteme GmbH, 73527 Schwäbisch Gmünd (DE)
(72) Erfinder: Heilig, Arnulf, 73529, Schwäbisch Gmünd (DE); Bischofberger, Michael, 73529, Schwäbisch Gmünd (DE)

(56) Entgegenhaltungen:
- EP-A1- 1 125 823
- EP-A1- 1 127 775
- DE-A1- 19 837 665

## Beschreibung

Die Erfindung betrifft ein Verfahren zur Steuerung einer elektrischen Servolenkung und eine elektrische Servolenkung zur Durchführung des Verfahrens nach den Oberbegriffen der Ansprüche 1 und 14.

Die US 6 425 454 B1 beschreibt eine elektrische Servolenkung und ein Verfahren zum Betrieb der elektrischen Servolenkung bei der über eine Lenkwelle das von einem Fahrer eines Fahrzeugs auf eine Lenkhandhabe aufgebrachte Lenkmoment zur Lenkwinkelverstellung ein oder mehrerer gelenkter Räder des Fahrzeugs übertragen wird. Zur Unterstützung der Lenkkraft des Fahrers ist ein elektrischer Servomotor vorgesehen, in welchem in Abhängigkeit von dem an der Lenkhandhabe in eine Steuer- und/oder Regelungseinrichtung eingegebenen Lenkwinkel-Sollwert und einem Lenkmoment an der Lenkhandhabe ein Motorstellmoment erzeugt wird. Das Motorstellmoment wird über einen Abtrieb auf die Lenkwelle und auf das gelenkte Rad oder die gelenkten Räder übertragen. Die elektrische Servolenkung weist eine Sensorik, bestehend aus einem Winkelsensor und Momentensensor an der Lenkhandhabe und u.a. einem Winkelsensor zur Messung des Drehwinkels des Abtriebes des elektrischen Servomotors auf. Ein Drehmomentsensor zur Messung des Drehmoments an dem Abtrieb des elektrischen Servomotors kann entfallen, da die elektrische Servolenkung eine Einrichtung zum Abschätzen des Moments an der Lenkhandhabe und zum Abschätzen des Moments an dem Abtrieb des elektrischen Servomotors aufweist.

Aus US6425454B1 ist der Oberbegriff vom Anspruch 1 gebildet.

Anhand der Sensorsignale kann eine derartige elektrische Servolenkung in Abhängigkeit von der Bauart des elektrischen Servomotors beispielsweise über eine feldorientierte Regelung angesteuert werden , wobei in Abhängigkeit von der Bewegung der Lenkhandhabe der Drehwinkel des Abtriebs des elektrischen Servomotors sensorisch erfasst wird, der Steuer- und/oder Regelungseinrichtung zugeführt und dieser vorzugsweise unter Berücksichtigung von aktuellen Fahrt- und Fahrzeugparametern über die Stromfrequenz oder die zugeführte elektrische Leistung gesteuert wird.

Tritt bei solchen elektrischen Servolenkungen ein Fehler oder ein Ausfall an dem Momentensensor an der Lenkhandhabe auf, so wird der elektrische Servomotor abgeschaltet, was in Abhängigkeit von der jeweiligen Fahrsituation einen starken Anstieg des vom Fahrer an der Lenkhandhabe aufzubringenden Moments zur Folge haben kann und zu Irritationen des Fahrers führen kann.

Der Erfindung liegt die Aufgabe zugrunde, ein Verfahren zur Steuerung einer elektrischen Servolenkung und eine elektrische Servolenkung zu schaffen, die ein unkritisches Verhalten bei einer Fehlfunktion oder einem Ausfall eines Momentensensors an der Lenkhandhabe aufweist.

Die Aufgabe wird mit einem Verfahren zur Steuerung einer elektrischen Servolenkung mit den Merkmalen des Anspruches 1 gelöst.

Dadurch dass im Betrieb der elektrischen Servolenkung ständig insbesondere von der Steuer- und/oder Regelungseinrichtung ein Differenz- oder Offsetwert von dem an der Lenkhandhabe eingegebene Lenkwinkel-Sollwert und einem Lenkwinkel-Istwert der gelenkten Räder des Fahrzeugs ermittelt wird und anhand des Offsetwertes ein virtuelles Moment der Lenkhandhabe als Ersatz für das gemessene Moment an der Lenkhandhabe ermittelt wir, ist bei Ausfall oder einer Fehlfunktion des Momentensensors an der Lenkhandhabe ständig ein aktuelles virtuelles Moment der Lenkhandhabe verfügbar, das zur Ansteuerung des elektrischen Servomotors angewandt werden kann. Damit ist auch nach einem Ausfall des Momentensensors an der Lenkhandhabe zumindest eine gewisse Zeit lang ein Betrieb der elektrischen Servolenkung ohne totale Abschaltung des elektrischen Servomotors und ohne Irritationen des Fahrers zu verursachen, möglich.

Bevorzugte Ausführungen der Erfindung ergeben sich aus den Unteransprüchen.

In einer besonders bevorzugte Ausführungsform des Verfahrens zur Steuerung der elektrischen Servolenkung wird das virtuelle Moment der Lenkhandhabe aus dem Lenkwinkel-Istwert, dem Dreh-Winkel des Abtriebs des elektrischen Servomotors, dem Offsetwert und der Steifigkeit der Kinematik der elektrischen Servolenkung von der Steuer- und/oder Regelungseinrichtung ermittelt und der elektrische Servomotor gesteuert. Bevorzugt wird dabei das Moment des elektrischen Servomotors bei einem Fehler des Momentensensors an der Lenkhandhabe über eine abgespeicherte Übergangsfunktion, wie etwa eine Rampenfunktion schrittweise reduziert.

Es kann auch zweckmäßig sein, die Übergangsfunktion als streng monoton fallende Funktion mit gleicher oder verschiedener Steigung vorzusehen.

Bevorzugt wird das Moment des elektrischen Servomotors von der Steuer- und/oder Regelungseinrichtung über eine Übergangsfunktion reduziert, wenn sich das virtuelle Moment der Lenkhandhabe um einen vorgebbaren Grenzwert von beispielsweise 2 Nm verringert.

Ändert sich der Richtungssinn des virtuellen Moments der Lenkhandhabe jedoch plötzlich und überschreitet der Betrag der Änderung des virtuellen Momentes einen bestimmten Grenzwert, der vorgebbar sein kann, so wird der elektrische Servomotor bevorzugt von der Steuer- und/oder Reglungseinrichtung abgeschaltet. Der elektrische Servomotor wird auch abgeschaltet, wenn ein Offsetwert aufgrund eines Fehlers an einem Winkelsensor an der Lenkhandhabe oder an dem Abtrieb des elektrischen Servomotors nicht ermittelt werden kann und der Lenkwinkel-Istwert in der jeweiligen Fahrsituation relativ klein ist und einen vorgebbaren Grenzwert nicht überschreitet.

Ein Abschalten des elektrischen Servomotors ist aus sicherheitstechnischen Gründen vertretbar, wenn der Lenkwinkel-Istwert kleiner als ein vorgebbarer Grenzwert ist und ein Fehler an dem Winkelsensor an der Lenkhandhabe oder ein Fehler an dem Momentensensor an der Lenkhandhabe auftritt. Ein Grenzwert des Lenkwinkel-Istwertes kann dabei etwa 10 Grad betragen. Der elektrische Servomotor kann auch von der Steuer- und/oder Regelungseinrichtung in Kombination mit den genannten Kriterien oder ausschließlich dann abgeschaltet werden, wenn die Lenkgeschwindigkeit einen vorgebbaren Grenzwert wie etwa 100°/sec. überschreitet. Das Verfahren zur Steuerung der elektrischen Servolenkung eignet sich für elektrische Servolenkungen von Personenkraftwagen oder Nutzkraftwagen in gleicher Weise.

Die Erfindung wird nun näher anhand eines Ausführungsbeispiels und anhand der beiliegenden Zeichnung beschrieben.
- Fig. 1: zeigt eine schematische Ansicht einer elektrischen Servolenkung,
- Fig. 2: zeigt in einem Blockschaltbild das Verfahren zur Steuerung der elektrischen Servolenkung bei Ausfall des Momentensensors an der Lenkhandhabe.

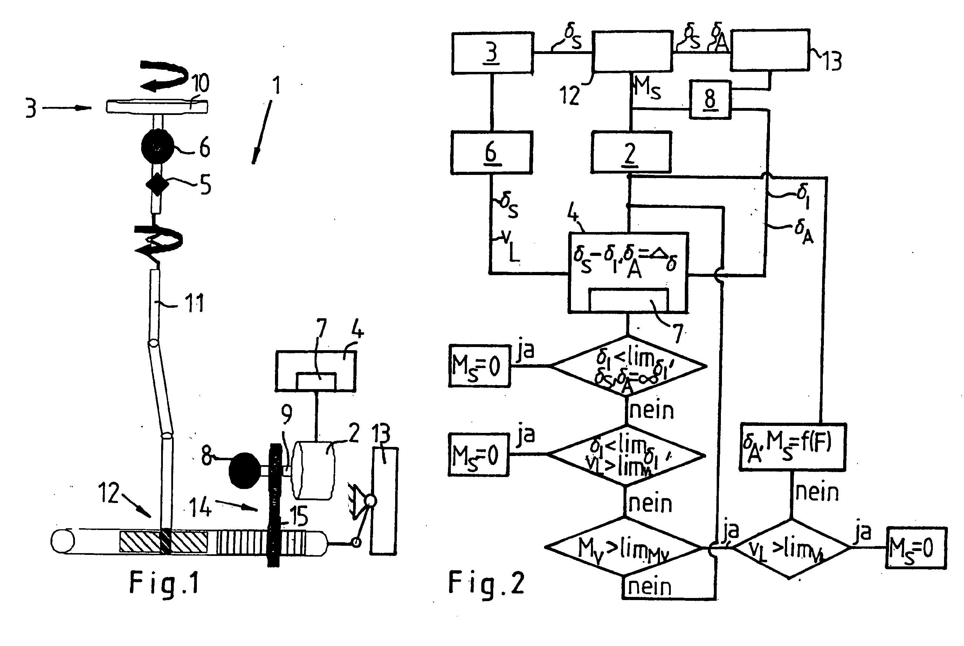

In Figur 1 ist in einer schematischen Ansicht eine elektrische Servolenkung 1 dargestellt, deren als Lenkrad 10 ausgebildete Lenkhandhabe 3 mechanisch über eine Lenkwelle 11 und ein Zahnstangen-Lenkgetriebe 12 mit lenkbaren Rädern 13 eines Fahrzeugs zu deren Lenkwinkelverstellung verbunden ist. Ein Abtrieb 9 eines elektrischen Servomotors 2, dessen Drehzahl und Moment Mₛ von einer Steuer- und/oder Regelungseinrichtung 4 gesteuert wird, überträgt sein Drehmoment über ein Zahnriemengetriebe 14 auf eine Zahnstange 15 des Zahnstangen-Lenkgetriebes 12. Zu diesem Zweck bildet die Zahnstange 15 mit einer Lenkmutter 16 eine Bewegungsschraube zur Axialverschiebung der Zahnstange 15. Die Steuer- und/oder Regelungseinrichtung 4 verarbeitet Sensorsignale eines Winkelsensors 6 und eines Momentensensors 5 an der Lenkhandhabe 3, sowie eines Winkelsensors 8 an dem Abtrieb 9 des elektrischen Servomotors 2.

Der Winkelsensor 6 an der Lenkhandhabe 3 liefert einen Lenkwinkel-Sollwert δₛ sowie einen Lenkgeschwindigkeitswert V_{L}. Die Art des Ansteuerungssignals an den elektrischen Servomotor 2 kann verschieden sein, wie z.B. ein variables Spannungssignal oder ein frequenzmoduliertes Stromsignal und kann einem Kennfeld entnommen sein.

Im Betrieb der elektrischen Servolenkung 1 wird von der Steuer- und/oder Regelungseinrichtung 4 ein Offsetwert Δ_{δ} aus dem Lenkwinkel-Sollwert δ_{S} und einem Lenkwinkel-Istwert δₗ, der auch durch den Winkelsensor 8 an dem Abtrieb 9 des elektrischen Servomotors 2 als Winkel δ_{A} des Abtriebs 9 dargestellt sein kann, gebildet. Anhand des ständig ermittelten Offsetwertes Δ_{δ} kann ein virtuelles Moment Mᵥ, das dem von dem Momentensensor 5 an der Lenkhandhabe 3 gemessenen Moment an der Lenkhandhabe angenähert ist, von einer Einrichtung 7 zur Abschätzung des Momentes an der Lenkhandhabe 3 bestimmt werden. Das virtuelle Moment Mᵥ wird bei einer Fehlfunktion oder einem Ausfall des Momentensensors 5 an der Lenkhandhabe 3 benutzt, um den elektrischen Servomotor 2 von der Steuer- und/oder Regelungseinrichtung 4 anzusteuern.

Bei Überschreiten eines Grenzwertes des virtuellen Moments Mᵥ oder dessen Ableitung werden die in Figur 2 dargestellten Steuerungsmaßnahmen für den elektrischen Servomotor 2 und dessen Moment M_{S} und Drehwinkel δ_{A} seines Abtriebes 9 getroffen.

In Figur 2 ist in einem Blockschaltbild ein Verfahren zur Steuerung des elektrischen Servomotors 2 in Fig. 1 gezeigt, das bei Ausfall des Momentensensors 5 an der Lenkhandhabe 3 eingesetzt wird. Der an der Lenkhandhabe 3 eingegebene Lenkwinkel-Sollwert δₛ wird über das Lenkgetriebe 12, das die Zahnstange 15 umfaßt, auf ein lenkbares Rad 13 mechanisch übertragen. Der elektrische Servomotor 2 wirkt mit seinem Abtrieb auf das Lenkgetriebe 12 und stellt ein Moment Mₛ und einen Drehwinkel δ_{A} bereit.

Der Winkelsensor 6 an der Lenkhandhabe 3 erfaßt den Lenkwinkel-Sollwert δₛ und die Lenkgeschwindigkeit V_{L} an der Lenkhandhabe 3, die eingangsseitig der Steuer- und/oder Regelungseinrichtung 4 zugeführt werden. In dem Blockschaltbild ist ein Momentensignal an der Lenkhandhabe 3 nicht vorgesehen, da die Funktion der elektrischen Servolenkung 1 bei Ausfall des Momentensensors 5 (vgl. Fig.1) dargestellt ist. Ein Winkelsensor 8 erfaßt an dem Abtrieb 9 des elektrischen Servomotors 2 oder an dem gelenkten Rad 13 den Winkel δ_{A} des Abtriebs 9 und/oder den Lenkwinkel-Istwert δₗ.

Als Ersatz für das nicht vorhandene Momentensignal des Moments an der Lenkhandhabe 3 errechnet die Einrichtung 7 zur Abschätzung des Momentes an der Lenkhandhabe 3 der Steuer- und/oder Regelungseinrichtung 4 ein virtuelles Moment Mᵥ. Dazu wird ein Offsetwert Δ_{δ} aus der Differenz von Lenkwinkel-Sollwert δₛ und Lenkwinkel-Istwert δₗ oder anstatt dem Lenkwinkel-Istwert, durch den Winkel δ_{A} des Abtriebs 9 des elektrischen Servomotors 2 gebildet. Die Steifigkeit des Gesamtsystems wird dabei berücksichtigt. Das virtuelle Moment Mᵥ dient zur Ansteuerung des elektrischen Servomotors 2. Dabei prüft die Steuer- und/oder Regelungseinrichtung 4 ob sich das virtuelle Moment Mᵥ um einen vorgebbaren Grenzwert lim_{Mv} der in dem Ausführungsbeispiel 2 Nm betragen kann, oder darüber hinaus verringert hat, zudem ob die Lenkgeschwindigkeit V_{L} einen Grenzwert lim_{vL}, übersteigt. Die Steuer- und/oder Regelungseinrichtung 4 reduziert die Momentenunterstützung des elektrischen Servomotors 2 über eine Übergangsfunktion F, wenn das virtuelle Moment Mᵥ den vorgebbaren Grenzwert lim_{Mv} überschreitet, die Lenkgeschwindigkeit V_{L} aber den vorgebbaren Grenzwert lim_{vL} nicht überschreitet. Die Übergangsfunktion F ist vorzugsweise eine Rampenfunktion. In einer besonders bevorzugten Ausführungsform des Verfahrens zur Steuerung der elektrischen Servolenkung 1 wird das Moment Mₛ des Servomotors 2 bei Anwendung der Übergangsfunktion F zusätzlich um etwa 30 % reduziert, was von dem Fahrer des Fahrzeugs nicht als irritierend, wohl aber als Indiz einer Änderung in der Servounterstützung wahrgenommen wird. Übersteigt die Lenkgeschwindigkeit V_{L} den Grenzwert lim_{vL} von beispielsweise 100°/s, so schaltet die Steuer- und/oder Regelungseinrichtung 4 den elektrischen Servomotor 2 ab, sein Moment Mₛ wird 0 Nm. Der elektrische Servomotor 2 wird auch abgeschaltet, wenn ein Winkelsensor 6, 8 keine plausiblen Signale oder gar keine Signale liefert, wie dies mit δ_{S}, δ_{A} = ∞ verdeutlicht ist, sofern der Lenkwinkel-Istwert δₗ einen unkritischen Grenzwert lim_{δl} von beispielsweise 10 ° nicht überschreitet.

## Patentansprüche

1. Verfahren zur Steuerung einer elektrischen Servolenkung (1) für ein Fahrzeug, mit einem elektrischen Servomotor (2), mit einer Lenkhandhabe (3) zur Eingabe eines Lenkwinkel-Sollwertes (δₛ) in eine Steuer- und/oder Regelungseinrichtung (4), mit einem Momentensensor (5) und einem Winkelsensor (6) für die Lenkhandhabe (3) und mit einer Einrichtung (7) zum Abschätzen des Momentes (Mᵥ) an der Lenkhandhabe (3) und mit einem Winkelsensor (8) zur Bestimmung des Winkels (δ_{A}) eines Abtriebs (9) des elektrischen Servomotors (2), **dadurch gekennzeichnet, dass** ständig ein Offsetwert (Δ_{δ}) von dem Lenkwinkel-Sollwert (δₛ) und einem Lenkwinkel-Istwert (δ₁) ermittelt wird und ein virtuelles Moment (Mᵥ) der Lenkhandhabe (3) anhand des Offsetwertes (Δ_{δ}) ermittelt wird.

2. Verfahren nach Anspruch 1, **dadurch gekennzeichnet, dass** das virtuelle Moment (Mᵥ) der Lenkhandhabe (3) aus dem Lenkwinkel-Istwert (δ₁), dem Winkel (δ_{A}) des Abtriebs (9) des elektrischen Servomotors (2), dem Offsetwert (Δ_{δ}) und der Steifigkeit der Kinematik der elektrischen Servolenkung (1) von der Steuer- und/oder Regelungseinrichtung (4) ermittelt wird.

3. Verfahren nach einem der Ansprüche 1 oder 2, **dadurch gekennzeichnet, dass** bei einer Fehlfunktion oder einem Ausfall des Momentensensors (5) der Lenkhandhabe (3) in Abhängigkeit von dem virtuellen Moment (Mᵥ) der Lenkhandhabe (3), dem Lenkwinkel-Istwert (δ₁) und der von der Lenkhandhabe (3) vorgegebenen Lenkgeschwindigkeit (v_{L}) ein Moment (M_{S}) des elektrischen Servomotors (2) von der Steuer- und/oder Regelungseinrichtung (4) über eine Übergangsfunktion (F) reduziert wird.

4. Verfahren nach Anspruch 3, **dadurch gekennzeichnet, dass** die Übergangsfunktion (F) ein Rampenfunktion ist.

5. Verfahren nach Anspruch 3, **dadurch gekennzeichnet, dass** die Übergangsfunktion (F) eine streng monoton fallende Funktion ist.

6. Verfahren nach einem der Ansprüche 1 bis 5, **dadurch gekennzeichnet, dass** das Moment (Mₛ) des elektrischen Servomotors (2) von der Steuer- und/oder Regelungseinrichtung (4) über die Übergangsfunktion (F) reduziert wird, wenn sich das virtuelle Moment (Mᵥ) der Lenkhandhabe (3) bis zu einem vorgebbaren Grenzwert (lim_{Mv}) verringert hat.

7. Verfahren nach Anspruch 6, **dadurch gekennzeichnet, dass** der Grenzwert (lim_{Mv}) des virtuellen Moments (Mᵥ) an der Lenkhandhabe (3) etwa 2 Nm ist.

8. Verfahren nach einem der Ansprüche 1 bis 5, **dadurch gekennzeichnet, dass** der elektrische Servomotor (2) von der Steuer- und/oder Regelungseinrichtung (4) abgeschaltet wird, wenn das virtuelle Moment (Mᵥ) der Lenkhandhabe (3) seinen Richtungssinn bei gleichzeitigem Überschreiten des vorgebbaren Grenzwertes (lim_{Mv}) geändert hat.

9. Verfahren nach einem der Ansprüche 1 bis 8, **dadurch gekennzeichnet, dass** der elektrische Servomotor (2) von der Steuer- und/oder Regelungseinrichtung (4) abgeschaltet wird, wenn ein Fehler an einem Winkelsensor (6,8) der elektrischen Servolenkung (1) von der Steuer- und/oder Regelungseinrichtung (4) erkannt wird.

10. Verfahren nach einem der Ansprüche 1 bis 9, **dadurch gekennzeichnet, dass** der elektrische Servomotor (2) von der Steuer- und/oder Regelungseinrichtung (4) abgeschaltet wird, wenn der Lenkwinkel-Istwert (δ₁) kleiner als ein vorgebbarer Grenzwert (lim_{δI}) ist und ein Fehler an dem Winkelsensor (6) für die Lenkhandhabe (3) oder ein Fehler an dem Momentensensor (5) an der Lenkhandhabe (3) auftritt.

11. Verfahren nach Anspruch 10, **dadurch gekennzeichnet, dass** der Grenzwert (lim_{δI}) etwa 10° beträgt.

12. Verfahren nach einem der Ansprüche 1 bis 11, **dadurch gekennzeichnet, dass** der elektrische Servomotor (2) von der Steuer- und/oder Regelungseinrichtung (4) abgeschaltet wird, wenn die Lenkgeschwindigkeit (v_{L}) einen vorgebbaren Grenzwert (lim_{vL}) überschreitet.

13. Verfahren nach Anspruch 12, **dadurch gekennzeichnet, dass** der vorgebbare Grenzwert (lim_{vL}) etwa 100°/s beträgt.

14. Elektrische Servolenkung zur Durchführung des Verfahrens nach einem der Ansprüche 1 bis 13, **dadurch gekennzeichnet, dass** die elektrische Servolenkung (1) als Hilfskraftlenkung in einem Personenkraftwagen oder Nutzkraftwagen eingebaut ist.

## Claims

1. Method for controlling an electrical power steering (1) for a vehicle, having an electrical servomotor (2), having a steering device (3) for entering a reference value (δ_{S}) of a steering angle into a control and/or regulation device (4), having a moment sensor (5) and an angle sensor (6) for the steering device (3) and having a device (7) for estimating the moment (Mᵥ) at the steering device (3) and having an angle sensor (8) for determining the angle (δ_{A}) of a power take-off (9) of the electrical servomotor (2), wherein an offset value (Δ_{δ}) is determined constantly from the reference value (δ_{S}) of the steering angle and an actual value (δ_{I}) of the steering angle and a virtual moment (Mᵥ) of the steering device (3) is determined on the basis of the offset value (Δ_{δ}).

2. The method of claim 1, wherein the virtual moment (Mᵥ) of the steering device (3) is determined by the control and/or regulation device (4) from the steering angle actual value (δ_{I}), the angle (δ_{A}) of the power take-off (9) of the electrical servomotor (2), the offset value (Δ_{δ}), and the stiffness of the kinematics of the electrical power steering (1).

3. The method of either of claims 1 and 2, wherein in the event of a malfunction or a failure of the moment sensor (5) of the steering device (3), a moment (Mₛ) of the electrical servomotor (2) is reduced by the control and/or regulation device (4) by way of a transition function (F), as a function of the virtual moment (Mᵥ) of the steering device (3), the actual value (δ_{I}) of the steering angle and the steering velocity (v_{L}) specified by the steering device (3).

4. The method of claim 3, wherein the transition function (F) is a ramp function.

5. The method of claim 3, wherein the transition function (F) is a strictly monotonously decreasing function.

6. The method of any of claims 1 to 5, wherein the moment (Mₛ) of the electrical servomotor (2) is reduced by the control and/or regulation device (4) by way of the transition function (F), if the virtual moment (Mᵥ) of the steering device (3) has decreased to a specifiable limiting value (lim_{Mv}).

7. The method of claim 6, wherein the limiting value (lim_{Mv}) of the virtual moment (Mᵥ) at the steering device (3) is approximately 2 Nm.

8. The method of any of claims 1 to 5, wherein the electrical servomotor (2) is switched off by the control and/or regulation device (4) when the virtual moment (Mᵥ) of the steering device (3) has changed its sense of direction, while simultaneously exceeding the specifiable limiting value (lim_{Mv}).

9. The method of any of claims 1 to 8, wherein the electrical servomotor (2) is switched off by the control and/or regulation device (4) when an error at an angle sensor (6, 8) of the electrical power steering (1) is detected by the control and/or regulation device (4).

10. The method of any of claims 1 to 9, wherein the electrical servomotor (2) is switched off by the control and/or regulation device (4) when the steering angle actual value (δ_{I}) is less than a specifiable limiting value (lim_{δI}) and an error occurs at the angle sensor (6) for the steering device (3) or an error occurs at the moment sensor (5) at the steering device (3).

11. The method of claim 10, wherein the limiting value (lim_{δI}) is approximately 10°.

12. The method of any of claims 1 to 11, wherein the electric servomotor (2) is switched off by the control and/or regulation device (4) when the steering speed (v_{L}) exceeds a specifiable limiting value (lim_{vL}).

13. The method of claim 12, wherein the specifiable limiting value (lim_{vL}) is approximately 100°/s.

14. Electrical power steering for carrying out the method of any of claims 1 to 13, wherein the electrical power steering (1) is incorporated as auxiliary power steering in a passenger motor vehicle or utility motor vehicle.

## Revendications

1. Procédé de commande d'une servodirection électrique (1) pour un véhicule, qui présente
un servomoteur électrique (2),
un volant (3) qui introduit une valeur de consigne (δ_{S}) d'angle de braquage dans un dispositif (4) de commande et/ou de régulation,
un capteur de couple (5),
un capteur d'angle (6) pour le volant (3),
un dispositif (7) qui estime le couple (Mᵥ) appliqué sur le volant (3) et
un capteur d'angle (8) qui détermine l'angle (δ_{A}) de l'arbre moteur (9) du servomoteur électrique (2), **caractérisé en ce que**
une valeur de décalage (Δ_{δ}) entre la valeur de consigne (δ_{S}) de l'angle de braquage et la valeur effective (δ₁) de l'angle de braquage est déterminée et un couple virtuel (Mᵥ) du volant (3) est déterminé à l'aide de la valeur de décalage (Δ_{δ}).

2. Procédé selon la revendication 1, **caractérisé en ce que** le couple virtuel (Mᵥ) du volant (3) est déterminé par le dispositif de commande et/ou de régulation (4) à partir de la valeur effective (δ_{I}) de l'angle de braquage, de l'angle (δ_{A}) de l'arbre moteur (9) du servomoteur électrique (2), de la valeur de décalage (Δ_{δ}) et de la rigidité de la cinématique de la servodirection électrique (1).

3. Procédé selon l'une des revendications 1 ou 2, **caractérisé en ce qu'**en cas de fonctionnement défectueux ou de défaillance du capteur de couple (5) du volant (3), le couple (Mₛ) du servomoteur électrique (2) est réduit par le dispositif de commande et/ou de régulation (4) par l'intermédiaire d'une fonction de transfert (F) en fonction du couple virtuel (Mᵥ) du volant (3), de la valeur effective (δ₁) de l'angle de braquage et de la vitesse prédéterminée de braquage (V_{L}) du volant (3).

4. Procédé selon la revendication 3, **caractérisé en ce que** la fonction de transfert (F) est une fonction en rampe.

5. Procédé selon la revendication 3, **caractérisé en ce que** la fonction de transfert (F) est une fonction qui décroît fortement de manière monotone.

6. Procédé selon l'une des revendications 1 à 5, **caractérisé en ce que** le couple (Mₛ) du moteur électrique (2) est réduit par le dispositif de commande et/ou de régulation (4) par l'intermédiaire de la fonction de transfert (F) lorsque le couple virtuel (Mᵥ) du volant (3) a diminué jusqu'à une valeur limite prédéterminée (lim_{MV}).

7. Procédé selon la revendication 6, **caractérisé en ce que** la valeur limite (lim_{MV}) du couple virtuel (M_{V}) sur le volant (3) est d'environ 2 nm.

8. Procédé selon l'une des revendications 1 à 5, **caractérisé en ce que** le servomoteur électrique (2) est débranché par le dispositif de commande et/ou de régulation (4) lorsque le couple virtuel (M_{V}) du volant (3) a changé de sens de rotation tout en dépassant la valeur limite prédéterminée (lim_{MV}).

9. Procédé selon l'une des revendications 1 à 8, **caractérisé en ce que** le servomoteur électrique (2) est débranché par le dispositif de commande et/ou de régulation (4) lorsqu'un défaut est détecté sur un capteur d'angle (6, 8) de la servodirection électrique (1) par le dispositif de commande et/ou de régulation (4).

10. Procédé selon l'une des revendications 1 à 9, **caractérisé en ce que** le servomoteur électrique (2) est débranché par le dispositif de commande et/ou de régulation (4) lorsque la valeur effective (δ₁) de l'angle de braquage est inférieure à une valeur limite prédéterminée (lim_{δl}) et lorsqu'un défaut survient sur le capteur d'angle (6) du volant (3) ou qu'un défaut survient sur le capteur de couple (5) du volant (3).

11. Procédé selon la revendication 10, **caractérisé en ce que** la valeur limite (lim_{δl}) est d'environ 10°.

12. Procédé selon l'une des revendications 1 à 11, **caractérisé en ce que** le servomoteur électrique (2) est débranché par le dispositif de commande et/ou de régulation (4) lorsque la vitesse de braquage (V_{L}) dépasse une valeur limite prédéterminée (lim_{VL}).

13. Procédé selon la revendication 12, **caractérisé en ce que** la valeur limite (lim_{VL}) prédéterminée est d'environ 100°.s.

14. Servodirection électrique en vue de la mise en oeuvre du procédé selon l'une des revendications 1 à 13, **caractérisée en ce que** la servodirection électrique (1) est incorporée comme assistance au braquage dans une voiture automobile ou un véhicule utilitaire.
